# EUROPEAN PATENT APPLICATION

(11) **EP 4 836 606 A1**
(43) Date of publication of application: **04.11.2026**
(21) Application number: 24909954.0
(22) Date of filing: 03.09.2024
(51) Int. Cl.: H05K 5/06, H02B 1/46

(54) **POWER DISTRIBUTION BOX AND MANUFACTURING METHOD THEREFOR**

(30) Priority: 29.12.2023 CN 202311862062
(71) Applicant: BYD Company Limited, Shenzhen, Guangdong 518118 (CN)
(72) Inventor: YAN, Chaoxiao, Shenzhen, Guangdong 518118 (CN); LUO, Huajian, Shenzhen, Guangdong 518118 (CN); PENG, Qingbo, Shenzhen, Guangdong 518118 (CN); E, Congji, Shenzhen, Guangdong 518118 (CN)
(74) Representative: Taor, Simon Edward William
(86) International application number: PCT/CN2024/116587
(87) International publication number: WO 2025/139008

(57) **Abstract**

A power distribution box and a manufacturing method therefor. The power distribution box comprises a main body and a housing body, and the housing body is formed by via solidification of a potting adhesive, where the potting adhesive surrounds the main body.

## Description

### CROSS-REFERENCE TO RELATED APPLICATIONS

The present application claims priority to a Chinese patent application with the application date of December 29, 2023, application number 202311862062.9 and the application title "POWER DISTRIBUTION BOX AND MANUFACTURING METHOD THEREFOR", the entire content of which is incorporated herein by reference.

### FIELD

The present application relates to the technical field of power distribution boxes, particularly to a power distribution box and a manufacturing method therefor.

### BACKGROUND

As the intermediate carrier for external input and output of electrical energy and information data exchange in the battery pack, the power distribution box requires high attention to its insulation safety, integration, and thermal performance.

The prior arts mostly adopt conventional electrical insulation measures, and the main drawback of these technologies lies in the low insulation safety.

### SUMMARY

The objective of this present invention is to provide a power distribution box and a manufacturing method therefor, addressing the issue of low insulation safety in power distribution boxes.

To achieve the objective of the present invention, the following technical solution is provided:

In the first aspect, the present invention provides a power distribution box, including:
a main body;
a housing body formed by solidification of a potting adhesive, the potting adhesive surrounding the main body.

In one embodiment, the main body includes a plurality of components arranged at intervals, and the potting adhesive also fills a first gap between the adjacent components.

In one embodiment, the size of the first gap is d, satisfying: d≥0.4mm.

In one embodiment, the power distribution box further includes a connector, the connector is connected to the main body and electrically conductive, and at least a part of the connector is located outside the housing body.

In one embodiment, the connector includes a plug and/or a metal sheet.

In the second aspect, the present invention provides a manufacturing method of a distribution box, including:
A mold having a receiving cavity is provided;
A main body is received in the receiving cavity;
A potting adhesive is injected into the receiving cavity, and the main body is surrounded by the potting adhesive;
The mold is removed after the potting adhesive solidifies, and the solidified potting adhesive forms a housing body.

In one embodiment, the viscosity of the potting adhesive is η, satisfying: η ≤ 3500mPa.s.

In one embodiment, the density of the potting adhesive after curing is ρ, satisfying: ρ≤1.50g/cm3.

In one embodiment, the thermal conductivity coefficient of the potting adhesive after curing is a, satisfying: a≥0.6W/m.K.

In one embodiment, the tensile strength of the potting adhesive after curing is b, satisfying: b≥15MPa, and the elongation at break of the potting adhesive after curing is c, satisfying: c≥5%.

In one embodiment, the specific heat capacity of the potting adhesive after curing is e, satisfying: e≥1000J/kg·°C.

The power distribution box of the present invention is provided with a main body and a housing body formed by the solidification of potting adhesive, and the potting adhesive surrounds the main body, thoroughly insulating the electrical connection positions within the main body. This avoids the risk of arcing and ignition caused by exposed conductive parts under harsh working conditions, thereby enhancing the insulation safety of the power distribution box.

### BRIEF DESCRIPTION OF THE DRAWINGS

To more clearly illustrate the technical solutions in the embodiments of the present invention or the prior art, the accompanying drawings required for the description of the embodiments or the prior art will be briefly introduced below. It is apparent that the drawings described below are merely some embodiments of the present invention, and for person having ordinary skill in the art, other drawings can be obtained based on these drawings without creative effort.
FIG. 1 is a perspective view of a power distribution box according to an embodiment.
FIG. 2 is a sectional view of a power distribution box according to an embodiment.
FIG. 3 is a perspective view of a power distribution box and mold according to an embodiment.
FIG. 4 is an exploded view of a power distribution box and mold according to an embodiment.
FIG. 5 is a flowchart of a manufacturing method of a power distribution box according to an embodiment

Reference numerals:
100 power distribution box, 10- main body, 11- component, 12- circuit board, 20- housing body, 30- connector, 40- mold, 41-handle, 42- first mold, 421- first mold cavity, 422-injection hole, 43- second mold, 432- second mold cavity.

### DETAILED DESCRIPTION

Below, the technical solutions in the embodiments of the present invention will be clearly and comprehensively described with reference to the accompanying drawings. Obviously, the described embodiments are merely a part of the embodiments of the present invention, not all of them. Based on the embodiments of the present invention, all other embodiments obtained by person having ordinary skill in the art without creative effort fall within the scope of protection of the present invention.

It should be noted that when a component is referred to as "fixed to" another component, it can be directly attached to the other component or there may be a component in between. When a component is considered to be "connected to" another component, it can be directly connected to the other component or there may be a component in between.

Unless otherwise defined, all technical and scientific terms used in this invention have the same meaning as commonly understood by person having ordinary skill in the art to which this invention belongs. The terms used in the specification of this invention are solely for the purpose of describing specific embodiments and are not intended to limit the invention. The term "and/or" used in this invention includes any and all combinations of one or more related listed items.

Below, some embodiments of the present invention will be described in detail with reference to the accompanying drawings. The embodiments described below and the features thereof may be combined with each other without conflict.

The prior arts mostly adopt conventional electrical insulation measures, such as air isolation, insulation barrier isolation, and copper bar insulation material coating, and etc., to ensure the electrical clearance and creepage distance required by relevant standards (such as UL 2580, IEC 60664, etc.). The main defect of the prior arts lies in the incomplete insulation of electrical connection points, where conductive components are still exposed. Under harsh conditions such as thermal runaway, leakage, and water ingress in battery packs, there is a risk of arcing and ignition due to an increase in conductive medium. Due to the need to meet safety requirements such as electrical clearance and creepage distance in the prior arts, it is difficult to arrange high-voltage components in small spaces with multiple circuits. The power density of the power distribution box is often below 40W/cm³, resulting in low space utilization. In the prior arts, when the power distribution box is placed in a closed space without air convection and without any active cooling measures, it can only slowly radiate heat to the surroundings. Under overload or high-power charging conditions, there is a risk of overheating in the high-voltage components. To meet insulation coordination requirements, but due to space constraints in the power distribution box, it is not possible to select copper bars with larger cross-sections to reduce resistance and aid heat dissipation, which further leads to overheating of the power distribution box.

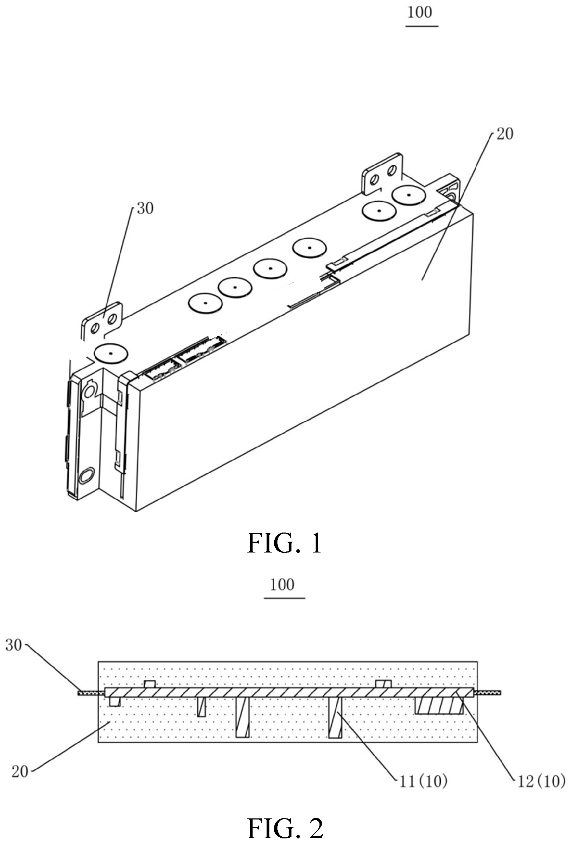

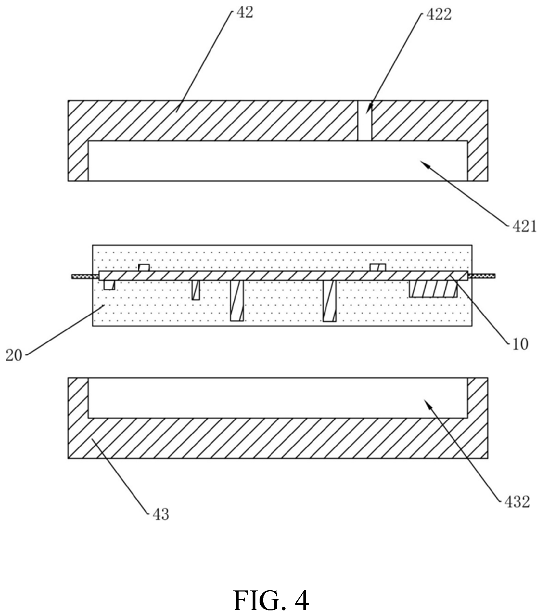

Referring to FIG. 1 and FIG. 4, the present invention provides a power distribution box 100 which includes a main body 10 and a housing body 20. The housing body 20 is formed by solidification of a potting adhesive, and the potting adhesive surrounds the main body 10.

The potting adhesive is an insulating and viscous material, which can specifically be epoxy resin potting adhesive, silicone potting adhesive, polyurethane potting adhesive, polyacrylate potting adhesive, electronic potting gel, etc., with no restrictions.

Electrical clearance refers to the shortest spatial distance measured between two conductive parts or between a conductive part and the protective interface of the equipment, which is the shortest distance that can achieve insulation through air while ensuring stable and safe electrical performance. Creepage distance refers to the phenomenon where the insulating material around the conductor becomes electrically polarized, resulting in the insulating material becoming charged, and the radius of this charged area is the creepage distance.

The power distribution box 100 of the present invention is provided with a main body 10 and a housing body 20 formed by solidification of a potting adhesive. After the potting adhesive solidifies, it serves to fix the main body 10, which can eliminate the need for a fixing structure within the main body 10. This can reasonably avoid the requirements for electrical clearance and creepage distance in insulation coordination standards, thereby improving the space utilization rate of the power distribution box 100.

The potting adhesive in the power distribution box 100 of the present invention surrounds tightly, thoroughly insulating the electrical connection positions in the main body 10, thus avoiding the risk of arcing and ignition caused by exposed conductive parts under harsh working conditions, and enhancing the insulation safety of the power distribution box 100.

In the prior art, the power distribution box 100 is equipped with a shell. This invention utilizes potting adhesive to form the housing body 20, saving the manufacturing cost of the shell. The time required for shell design accounts for more than 50% of the total design time of the power distribution box 100. This invention can greatly shorten the design time, reduce the workload, and lower the development cost.

Referring to FIG. 2, in one embodiment, the main body 10 includes a plurality of components 11 arranged at intervals, and the potting adhesive also fills a first gap between the adjacent components 11.

The main body also includes a circuit board 12, with a plurality of components 11 arranged at intervals on the circuit board 12.

Components 11 can include contactors, copper bars, cables, busbars, fuses, insulators, wiring terminals, wire management slots, etc., with no restrictions.

The contactor is used to determine whether the power distribution box 100 is electrically connected to the outside; the copper bar, including the neutral bar and ground bar, is used for wiring; the cable is used as a conductor; the busbar can be made of copper or aluminum conductors, without limitation, and is used to distribute current and voltage to various sub-switches.

The first gap refers to the spacing distance between two adjacent components 11.

Different types of components 11 are used to meet the operational requirements of the power distribution box 100, and the components 11 arranged at intervals must comply with the requirements for electrical clearance and creepage distance specified in the insulation coordination standards.

In one embodiment, the size of the first gap is d, satisfying: d≥0.4mm.

d can be 0.4mm, 0.5mm, 0.8mm, 1mm, etc., with no restrictions.

The first gap must meet the electrical clearance and creepage distance requirements specified in the relevant standard (UL 2580).

When d<0.4mm, the first gap between components 11 is too small, and this gap is smaller than the electrical clearance and creepage distance specified in relevant standards. As a result, air insulation cannot be achieved between adjacent components 11, and the insulating material is prone to becoming charged, leading to poor insulation safety of the power distribution box 100.

When d≥0.4mm, the first gap between components 11 meets the electrical clearance and creepage distance requirements specified in relevant standards, achieving air insulation between components 11. The insulating material is not charged, and the insulation safety of the power distribution box 100 is good.

Referring to FIG. 1 and FIG. 2, in one embodiment, the power distribution box 100 further includes a connector 30, the connector 30 is connected to the main body 10 and electrically conductive, and at least a part of the connector 30 is located outside the housing body 20.

One end of the connector 30 is connected to the main body 10 and electrically conductive, while the other end of the connector 30 is arranged outside the housing body 20 for external electrical connection, enabling the power distribution box 100 to operate normally.

In one embodiment, the connector 30 includes a plug and/or a metal sheet.

The plug can be a round plug (with a basic structure that is round and features a round mating surface), a rectangular plug (with a basic structure that is rectangular and features a rectangular or trapezoidal mating surface), or any other type, with no restrictions.

The fixing method of the plug can be crimping, welding, winding, surface mounting, etc., with no restrictions.

The plug can include a socket and a plug, and the connection method between the socket and the plug can be clamping (a plug with a curved groove and latch connection structure that locks through a small amount of rotation), direct insertion (a plug with a push-pull connection structure that inserts directly through thrust), latching (a plug with a latch and three-head threaded connection structure that locks through 90° rotation), screwing (a plug with a threaded structure that screws together through rotation), etc., without limitation.

The metal sheet can be aluminum, copper, or any other material, with no restrictions.

A plug and/or a metal sheet is/are installed as the connector 30, to establish electrical communication between the power distribution box 100 and the outside environment, ensuring the normal operation of the power distribution box 100.

In one embodiment, the power distribution box 100 further includes an insulating bracket, which is connected to the main body 10, with at least part of the insulating bracket located outside the housing body 20.

The insulating bracket can be made of plastic with a certain strength. The insulating bracket is equipped with first and second connecting holes arranged at intervals. The component 11 is connected and fixed to the insulating bracket through the first connecting hole, and a tray is connected and fixed to the insulating bracket through the second connecting hole. The connection method between the insulating bracket and the component 11 can be screw connection, clamping connection, welding, etc., without limitation. The connection method between the insulating bracket and the tray can also be screw connection, clamping connection, welding, etc., without limitation.

The insulating bracket can compensate for the vacancy of the installation point after removing the housing body, achieving the same installation and fixing effect.

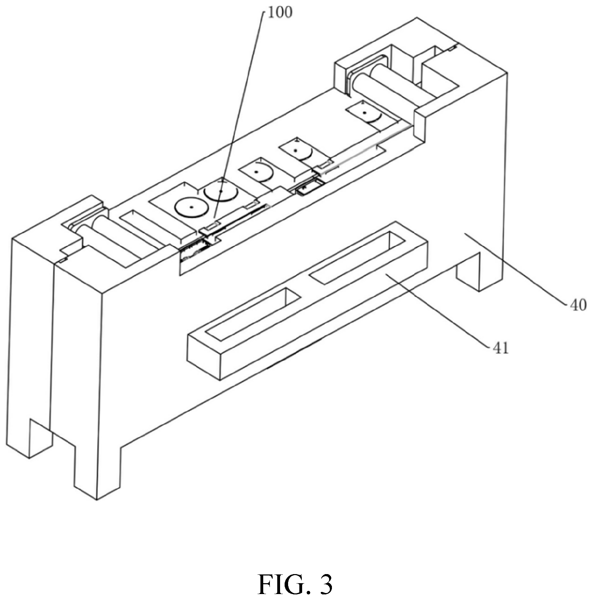

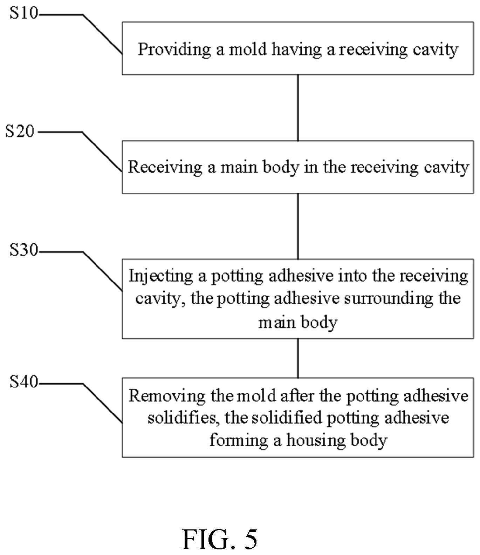

Referring to FIG. 3, FIG. 4 and FIG. 5, the present invention provides manufacturing method of a power distribution box, including:
Step S10, a mold having a receiving cavity is provided;
Step S20, a main body is received in the receiving cavity;
Step S30, a potting adhesive is injected into the receiving cavity, and the main body is surrounded by the potting adhesive;
Step S40, the mold is removed after the potting adhesive solidifies, and the solidified potting adhesive forms a housing body.

In step S10, the mold 40 is made of a material with high structural strength, specifically including metal materials, high-strength plastics, ceramics, etc. Metal materials such as aluminum, aluminum alloy, magnesium alloy, iron, iron alloy, etc. The mold 40 can be of an integrated structure, where the bottom plate and side plates are integrally formed through processes such as stamping and casting, without limitation. Alternatively, the mold 40 can be of a split structure, where the side plates and bottom plate are connected and fixed through welding, bonding, clamping, screwing, etc. The wall thickness of various parts of the mold 40 can be approximately uniform, meaning the thickness of the side plates can be approximately uniform, and the thicknesses of the bottom plate and side plates can also be approximately the same. The opening of the receiving cavity is located at the top of the mold 40.

In step S10, a handle 41 can be arranged on the mold 40 for ease of disassembly. The mold 40 includes a first mold 42 and a second mold 43. The first mold cavity 421 is arranged in the first mold 42, while the second mold cavity 432 is arranged in the second mold 43. The first mold cavity 421 and the second mold cavity 432 jointly form a receiving cavity.

In step S20, when the main body 10 is placed into the receiving cavity, a plurality of components 11 need to be arranged at intervals, and the components 11 arranged at intervals must meet the requirements for electrical clearance and creepage distance specified in the insulation coordination standard.

An injection hole 422 is arranged in the first mold 42. In step S30, potting adhesive is injected into the receiving cavity through the injection hole 422.

In step S30, the potting adhesive can be injected and potted using a professional electronic potting machine. The potting adhesive can be epoxy resin, addition-type silicone, etc. The professional electronic potting machine can be equipped with a mixing and vacuum potting device, which is convenient and efficient. When preparing the potting adhesive, it is necessary to heat and mix it. When preparing the potting adhesive, stir in a clockwise direction at a uniform speed, avoiding variations in speed. The potting speed should also be uniform to avoid generating bubbles.

In step S30, the injection direction of the potting adhesive can be from the top of the receiving cavity to the bottom of the receiving cavity.

In step S40, the setting time of the potting adhesive can be 35 minutes, which is conducive to assembly line production.

The produced power distribution box 100 includes a main body 10 and a housing body 20, with the housing body 20 being formed by solidification of a potting adhesive. This design can reasonably circumvent the requirements for electrical clearance and creepage distance specified in insulation coordination standards, further enhancing the space utilization rate of the power distribution box 100. Moreover, the potting adhesive provides a tight enclosure, thoroughly insulating the electrical connection positions within the main body 10. This prevents the risk of arcing and ignition caused by exposed conductive parts under harsh working conditions, thereby improving the insulation safety of the power distribution box 100.

In one embodiment, the viscosity of the potting adhesive is η, satisfying: η≤3500mPa.s.

η can be 2500mPa.s, 2800mPa.s, 3000mPa.s, 3300mPa.s, 3500mPa.s, etc., with no restrictions.

When η>3500 mPa·s, the viscosity of the potting adhesive is too high, resulting in poor fluidity when the potting adhesive is injected into the receiving cavity. If the construction environment is at a high temperature, the edge of the receiving cavity has not yet been filled with potting adhesive, and the previously injected potting adhesive has already undergone a curing reaction. At this point, it is impossible to adjust the thickness of the surface potting adhesive, and unevenness may occur after curing. In severe cases, the edge of the receiving cavity may not be completely potted, and high-viscosity potting adhesives are difficult to exhaust bubbles. When η≤ 3500 mPa·s, the fluidity of the potting adhesive is good, which helps to adjust the flatness of the potting adhesive surface during the injection process.

In one embodiment, the density of the potting adhesive after curing is ρ, satisfying: ρ≤1.50g/cm3.

ρ can be 1.50g/cm³, 1.40g/cm³, 1.30g/cm³, 1.20g/cm³, etc., with no restrictions.

When ρ>1.50g/cm3, the density of the cured potting adhesive is too high, resulting in a heavy mass of the potting adhesive, which is not conducive to the lightweight of the product. When ρ≤1.50g/cm3, the density of the cured potting adhesive is low, which is conducive to the lightweight of the product.

In one embodiment, the thermal conductivity coefficient of the potting adhesive after curing is a, satisfying: a≥0.6W/m.K.

a can be 0.6W/m.K, 0.8W/m.K, 0.9W/m.K, 1.0W/m.K, 1.2W/m.K, etc., with no restrictions.

When a<0.6W/m.K, the thermal conductivity coefficient of the potting adhesive is too low, preventing the heat from being transferred after the component 11 generates heat. The power distribution box 100 has poor heat dissipation performance, and some high-voltage components 11 may face the risk of overheating under overload or high-power charging conditions, leading to overheating of the power distribution box 100.

When a≥0.6W/m.K, the potting adhesive exhibits good thermal conductivity, significantly alleviating the heat generation issue of component 11. Simultaneously, it allows for a reduction in the length and cross-sectional area of the copper bars within the power distribution box 100, enhancing the spatial utilization efficiency of the power distribution box 100. This adjustment still ensures the current-carrying capacity of the power distribution box 100, and the present invention effectively accommodates the increasing demand for high-power charging and discharging.

In one embodiment, the tensile strength of the potting adhesive after curing is b, satisfying: b≥15MPa, and the elongation at break of the potting adhesive after curing is c, satisfying: c≥5%.

b can be 15MPa, 20MPa, 25MPa, 30MPa, 50MPa, etc., with no restrictions.

c can be 5%, 10%, 15%, 20%, 25%, etc., with no restrictions.

When b<15MPa, the tensile strength of the solidified potting adhesive is low, and the toughness of the housing body 20 formed after the potting adhesive solidifies is poor. Consequently, it cannot absorb the vibration energy transmitted from the vehicle body to the power distribution box 100 under daily operating conditions, potentially causing damage to the components 11 inside the power distribution box 100.

When c<5%, the elongation at break of the potting adhesive is low, and the housing body 20 formed after the potting adhesive solidifies is prone to cracking, which is detrimental to the structural stability of the interior of the power distribution box 100 and the overall structural stability of the power distribution box 100.

When b ≥ 15MPa, the potting adhesive exhibits high tensile strength. The housing body 20 formed after the potting adhesive solidifies possesses a certain degree of toughness, which can absorb a portion of the vibration energy transmitted from the vehicle body to the power distribution box 100 under daily operating conditions, thereby protecting the components 11 inside the power distribution box 100.

When c≥5%, the elongation at break of the potting adhesive is high, and housing body 20 formed after the potting adhesive solidifies is less prone to cracking, ensuring the structural stability of the interior of the power distribution box 100 and the overall structural stability of the power distribution box 100.

In one embodiment, the specific heat capacity of the potting adhesive after curing is e, satisfying: e≥1000J/kg·°C.

e can be 1000J/kg·°C, 1100J/kg·°C, 1200J/kg·°C, 1300J/kg·°C, etc., with no restrictions.

When e<1000J/kg· °C , the potting adhesive exhibits poor heat dissipation performance, resulting in less heat transfer from the components 11 after they generate heat. The power distribution box 100 also has poor heat dissipation performance, posing a risk of overheating for some high-voltage components 11 under overload or high-power charging conditions, which can lead to overheating of the power distribution box 100.

When e≥1000J/kg·°C, the potting adhesive exhibits good heat dissipation performance, significantly alleviating the high-temperature issue of component 11. Simultaneously, it allows for a reduction in the length and cross-sectional area of the copper bars within the power distribution box 100, enhancing the spatial utilization rate of the box. This adjustment still ensures the current-carrying capacity of the power distribution box 100, and the present invention can effectively accommodate the increasing demand for high-power charging and discharging.

In one embodiment, the hardness of the potting adhesive is 85±5 Shore D. Specifically, the hardness of the potting adhesive can be 80 Shore D, 83 Shore D, 85 Shore D, 88 Shore D, 90 Shore D, etc.

When the hardness of the potting adhesive is less than 80 Shore D, the housing body 20 formed by the solidified potting adhesive is too soft, and the degree of deformability of the housing body 20 is high, which may cause damage to the components 11; when the hardness of the potting adhesive is greater than 90 Shore D, the housing body 20 formed by the solidified potting adhesive is too hard, and it cannot absorb a portion of the vibration energy transmitted from the vehicle body to the power distribution box 100 under daily operating conditions; when the hardness of the potting adhesive is between 80 Shore D and 90 Shore D, it can absorb a portion of the vibration energy transmitted from the vehicle body to the power distribution box 100 under daily operating conditions while ensuring the strength of the housing body 20 itself.

In one embodiment, the surface resistivity of the potting adhesive is N1, satisfying: N1>1.0×10¹⁰Ω; the volume resistivity of the potting adhesive is N2, satisfying: N2 >1.0×10¹⁰Ω·cm.

N1 can be 1.5×10¹⁰Ω, 2.0×10¹⁰Ω, 2.5×10¹⁰Ω, 3.0×10¹⁰Ω, 3.5×10¹⁰Ω, etc., with no restrictions.

N2 can be 1.5×10¹⁰Ω.cm, 2.0×10¹⁰Ω.cm, 2.5×10¹⁰Ω.cm, 3.0×10¹⁰Ω.cm, 3.5×10¹⁰Ω.cm, etc., with no restrictions.

When N1≤1.0×10¹⁰Ω.cm, the surface resistivity of the potting adhesive is low, indicating good surface conductivity, which is detrimental to the insulation effect of the housing body 20. When N1>1.0×10¹⁰Ω.cm, the surface resistivity of the potting adhesive is high, indicating good surface conductivity, which is beneficial to the insulation effect of the housing body 20.

When N2 is less than or equal to 1.0×10¹⁰Ω.cm, the volume resistivity of the potting adhesive is low, indicating that the material has low efficiency as an electrical insulation component; when N2>1.0×10¹⁰Ω.cm, the volume resistivity of the potting adhesive is high, indicating that the material has high efficiency as an electrical insulation component.

In one embodiment, the potting adhesive can withstand a high temperature of 400°C without melting, ensuring better insulation safety and structural integrity within the power distribution box 100 during high temperatures, such as during the thermal diffusion process.

In one embodiment, the flame retardant grade of the potting adhesive is V0, meaning that after two 10-second combustion tests on the potting adhesive, the flame is extinguished within 30 seconds and no flammable material falls off, indicating that the flame retardant performance of the potting adhesive is good, and the safety of use of the power distribution box 100 is high.

Table 1 lists the specific parameter requirements for the potting adhesive and the corresponding testing standards.

**Table 1**

| Test Items | Test Result | Test Standard |
|---|---|---|
| Operation Time(min) | ≥30 | GB/T7123.1-2015 |
| Density(g/cm³) | ≤1.50 | GB/T533 |
| Thermal Conductivity Coefficient(W/m.K) | ≥0.6 | ASTM D5470-17 |
| Hardness(Shore D) | 85±5 | GB/T531.1-2008 |
| Tensile Strength(MPa) | ≥15 | GB/T528 |
| Shear Strength(MPa) | ≥15 | GB/T528 |
| Elongation at Break(%) | ≥5 | GB/T528 |
| Volume Resistivity(Ω.cm) | >1.0×1010 | GB/T1410-2006 |
| Surface Resistivity(Ω) | >1.0×1010 | GB/T1410-2006 |
| Dielectric Constant | <6 | GB/T1409-2006 |
| Voltage Withstand Test (AC, 3KV, 60s) | <3mA | GB/T1408.1 |
| Breakdown Strength (KV/mm) | >15 | GB/T1408.1-2016 |
| Flame Retardant Rating | V0 | UL-94 |
| Specific Heat Capacity (J/kg · °C) | ≥1000 | DSC Sapphire Method |

The power distribution box 100 of the present invention is provided with a main body 10 and a housing body 20 formed by solidification of a potting adhesive, and the potting adhesive surrounds the main body 10, saving the manufacturing cost of the shell. The present invention can greatly shorten design time, reduce workload, and lower development costs. The power distribution box 100 of the present invention uses potting adhesive to surround the main body 10, which can reasonably avoid the requirements for electrical clearance and creepage distance in the insulation coordination standards, further improving the space utilization rate of the power distribution box 100. Moreover, the potting adhesive surrounds tightly, providing complete insulation for the electrical connection positions in the main body 10, avoiding the risk of arcing and ignition caused by exposed conductive parts under harsh working conditions, and improving the insulation safety of the power distribution box 100. By adjusting the thermal conductivity and other parameters of the potting adhesive, the use of copper bars and other components in the components 11 can be reduced, and the length and cross-sectional area of the copper bars can be reduced while still ensuring the current-carrying requirements of the power distribution box 100 system. The power distribution box 100 of the present invention does not require shell design, saving the cost of the shell and its mold, greatly shortening design time, reducing workload, and lowering development costs.

In the description of the embodiments of the present invention, it should be noted that the orientation or positional relationship of the terms "center", "up", "down", "left", "right", "vertical", "horizontal", "inside", "outside" and other indicators is based on the orientation or positional relationship described in the accompanying drawings, only for the convenience of describing the present invention and simplifying the description, and does not indicate or imply that the device or element referred to must have a specific orientation, be constructed and operated in a specific orientation, and therefore cannot be understood as a limitation of the present invention.

The above disclosure is only a preferred embodiment of the present invention and cannot be used to limit the scope of the present invention. Person having ordinary skill in the art can understand and implement all or part of the above embodiments, and any equivalent variations made according to the claims of this invention still fall within the scope of this invention.

## Claims

1. A power distribution box (100), comprising:
a main body (10);
a housing body (20) formed by solidification of a potting adhesive, the potting adhesive surrounding the main body (10).

2. The power distribution box according to claim 1, wherein
the main body (910) comprises a plurality of components (11) arranged at intervals, and the potting adhesive also fills a first gap between the adjacent components (11).

3. The power distribution box according to claim 2, wherein
the size of the first gap is d, satisfying: d≥0.4mm.

4. The power distribution box (100) according to claim 1, wherein
the power distribution box (100) further comprises a connector (30), the connector (30) is connected to the main body (10) and electrically conductive, and at least a part of the connector (30) is located outside the housing body (20).

5. The power distribution box (100) according to claim 4, wherein
the connector (30) comprises a plug and/or a metal sheet.

6. A manufacturing method of a power distribution box, comprising:
providing a mold having a receiving cavity;
receiving a main body in the receiving cavity;
injecting a potting adhesive into the receiving cavity, the potting adhesive surrounding the main body;
removing the mold after the potting adhesive solidifies, the solidified potting adhesive forming a housing body.

7. The manufacturing method of the power distribution box according to claim 6, wherein
the viscosity of the potting adhesive is η, satisfying: η≤3500mPa.s.

8. The manufacturing method of the power distribution box according to claim 6, wherein
the density of the potting adhesive after curing is ρ, satisfying: ρ≤1.50g/cm³.

9. The manufacturing method of the power distribution box according to claim 6, wherein
the thermal conductivity coefficient of the potting adhesive after curing is a, satisfying: a≥ 0.6W/m.K.

10. The manufacturing method of the power distribution box according to claim 6, wherein
the tensile strength of the potting adhesive after curing is b, satisfying: b≥15MPa, and the elongation at break of the potting adhesive after curing is c, satisfying: c≥5%.

11. The manufacturing method of the power distribution box according to claim 6, wherein
the specific heat capacity of the potting adhesive after curing is e, satisfying: e≥1000J/kg·°C.
